# EUROPEAN PATENT APPLICATION

(11) **EP 0 692 905 A2**
(43) Date of publication of application: **17.01.1996**
(21) Application number: 95304391.6
(22) Date of filing: 22.06.1995
(51) Int. Cl.: H04N 1/192

(54) **Image scanning apparatus**

(30) Priority: 11.07.1994 US 273448
(71) Applicant: International Business Machines Corporation, Armonk, N.Y. 10504 (US)
(72) Inventor: Durr Edgar, Albert, Austin, Texas 78727 (US)
(74) Representative: Davies, Simon Robert

(57) **Abstract**

A linear sensor is provided for optical scanning of films 36 and slides which are urged past a linear scan array 1. A mechanism 13, 15, 112 oscillates the array laterally along a linear scan line in a direction transverse to the longitudinal direction of motion of the film or slide during the scanning process. By oscillating the linear sensor, pixels may be generated interposed between those conventionally generated by static linear sensor scans. These pixels are offset laterally from the conventional pixels, thereby effecting increased resolution to facilitate removal of image artifacts such as aliasing and the like with a linear sensor array previously restricted to a more limited resolution.

## Description

This invention relates to the scanning images stored on optical media.

In the photographic arts, as low cost computer processing became available, technology emerged for generating an electronic scan of film in order to capture and store digitized electronic images from the film. These scans were useful for archival and editing purposes, image enhancement and processing, and the like.

In the prior art, primary emphasis has been on resolution as the ability to resolve rows of lines in a grating, called the grating resolution. A film scanner might require, for example, a grating resolution of 24 line pairs per millimeter. Grating resolution is a function of the overall optical system.

Another measure of resolution is the ability to resolve the position of an edge on a single line, called the vernier resolution. The vernier resolution is most strongly affected by the number of sample points, or pixels, affecting, in mathematical terms, the Nyquist frequency and the generation of aliases visible as staircasing and moire effects, as will be described below.

The interaction of vernier and grating resolution has an interesting history. When the television standards were set, the vertical grating resolution was "sampled" by the scan lines, resulting a vernier resolution equal to the grating resolution. Horizontally television had a grating resolution limited by the electronic frequency response, but the scan was continuous, resulting in a theoretically infinite vernier resolution, limited in practice by noise. This imbalance in the vernier resolution resulted in a higher perceived resolution horizontally than vertically if the grating resolutions were set equal. The optimum ratio between vertical and horizontal grating resolutions to give equal perceived resolution was determined empirically to be about 1.4, and is called the Kell factor.

As a further example of grating and vernier resolution, the still image industry is settling on a 2000 pixel per inch standard, as in the Kodax photo CD. However, the motion picture industry is settling on a 4000 pixel per inch requirement. A primary difference is because in the motion picture industry, the crawl of staircasing and shimmer of moire effects of a limited vernier resolution are much more apparent as an image moves. Accordingly, the motion picture industry has found the need for 4000 pixels per inch to avoid alias effects, not because there is real information contained in the octave above 2000 pixels per inch in grating resolution.

Scanning technology requires the scanning hardware to be capable of very high vernier resolution to avoid aliasing. The image is then resized digitally to a lower resolution, similar to the use of oversampling and digital filters in audio technology, requiring a hardware grating resolution only equal to the lower output resolution of the digital resize. The digital resize can use special fast cut filters to avoid aliases even at lower output pixel resolution.

Accordingly, the invention provides apparatus for scanning an image stored in a medium comprising:
means for scanning first locations on said medium; and
means for scanning second locations on said medium, said second locations being disposed between said first locations.

Thus scanning hardware is provided which is capable of higher vernier resolution, which is the number of pixels, without necessarily higher grating resolution. The number of pixels is increased, affecting the vernier resolution, without changing the physical array itself or the grating resolution.

In image scanning several benefits arise from increasing the number of pixels of the scan. For example, such increased number of pixels allows for coverage in the scan beyond the actual image area of the film to include, for example, a timing track, and to allow for improved image detailing. Still further, such an accompanying increase in vernier resolution, as in the case of digital audio oversampling, facilitates resizing by means of digital filtering or the like to minimize aliases, thereby resulting in cleaner images and enabling rectilinearization algorithms. In this application, the number of pixel elements, sometimes called the vernier resolution, is more important than then the ability to separate close lines, sometimes called the grating resolution. A large number of sample points minimizes aliases producing a smooth, clean image (note that an image may be pictorial, textual, or any other suitable representation).

In the prior art, significant effort was expended in seeking to achieve these higher resolutions. The most common approach was simply to provide for a higher resolution linear sensor array. However, this higher resolution imaging array could easily account for a substantial portion of the cost of a scanner, as the cost of the imaging array component itself rises rapidly as a function of resolution.

The image scanning apparatus of the invention provides increased resolution of scanned images, while at the same time reducing image artifacts associated with the scan, such as aliasing and the like, and offers the advantages of more expensive higher resolution arrays while avoiding the increased cost of such arrays.

In a preferred embodiment, each second location is disposed in space between a corresponding pair of first locations (except for locations at the extremities). Typically said first locations define a first line, and said second locations lie on said first line, or define a second line which is parallel to said first line. The apparatus further includes means for urging said medium along a longitudinal axis perpendicular to said first line. Generally this will occur between said scanning of said first locations and said scanning of said second locations, in which case the second locations will define a second line parallel to the first line. An alternative would be to scan at said first and second locations both on a single line before advancing the medium onwards. The longitudinal axis will normally coincide with a convenient dimension of the medium, eg the length of a film, or height of a piece of paper.

In a preferred embodiment, said means for scanning said first and second locations comprises a single linear scanning array parallel with said first line, with means for displacing said array in a first direction parallel with said first line in between scanning said first and second locations. Typically, if adjacent ones of said first locations are separated by a preselected distance, said displacing means displaces said array one-half of said preselected distance. After the second locations have been scanned, the array is then displaced in a second direction, opposite to said first direction, generally by the same amount that it was initially displaced after scanning the first locations. Note that rather than moving the array, it would for example be possible to displace the medium itself in between scanning the first and second locations.

In a preferred embodiment, said medium is film (or slides), and the apparatus further comprises means for disposing said film between a light source and a light scanner means for collecting light; and means for directing light from said light source through said film to said light scanner means.

The invention also provides a method of scanning an image stored in a medium comprising the steps of: scanning first locations on said medium; and scanning second locations on said medium, said second locations being disposed between said first locations.

The invention further provides a method of resizing an image represented in a pixel grid having a first row of pixels and a second row of pixels parallel to said first row and offset relative to said first row to form a diagonal pixel grid, said method comprising the steps of:
resizing said first row of pixels to a third row of pixels parallel to said first row; and
resizing said second row of pixels to a fourth row of pixels parallel to said second row, pixels in said fourth row lying along columnar lines perpendicular to said third row, each of said columnar lines intersecting a corresponding pixel in said third row.

Such a re-sizing is particularly beneficial after scanning using offset pixel locations, since it allows the scanned image to be transformed or re-mapped back onto a square or at least rectangular grid, which is most convenient for storage, further processing, and display. It is also possible to resize pixels lying along at least one columnar line and transform a respective first column of pixels into a second column of pixels (indeed this provides an alternative approach to transforming to a rectangular grid).

Preferably said step of resizing said first row includes the step of convolving said first row of pixels with a sinc function, which effectively interpolates between the pixels, thereby allowing the row of pixels to be re-sampled along the row, without adding any (spurious) high frequency information.

The invention also provides a computer system for resizing an image represented in a pixel grid having a first row of pixels and a second row of pixels parallel to said first row and offset relative to said first row to form a diagonal pixel grid, said system comprising:
means for resizing said first row of pixels to a third row of pixels parallel to said first row; and
means for resizing said second row of pixels to a fourth row of pixels parallel to said second row, pixels in said fourth row lying along columnar lines perpendicular to said third row, each of said columnar lines intersecting a corresponding pixel in said third row.

Viewed from another aspect, the invention provides a system and method for scanning an image stored in a medium with a sensor array aligned along an axis adjacent said medium, in which said image is scanned with said array. Said array is then displaced along said axis, and said image is then re-scanned.

Preferably the displacing is in a first direction along said axis, and the array is displaced along said axis in a second direction before said image is re-scanned. It is also preferred that said medium is urged past said array during said scanning and said re-scanning.

Viewed from yet another aspect the invention provides a system for scanning film comprising means for disposing said film along a curved path, a segment of said path extending between a first and a second location; means for directing light from said first location through said film and said segment to said second location; linear scanner means for collecting said light at said second location; and means for moving said linear scanner means transversely to said path.

In a preferred embodiment, the system further includes means for moving said film along said path in time between said collecting. Said collecting is at periodic intervals and said system further includes control means for moving said linear scanner means a preselected distance in a first direction after a first of said intervals and moving said linear scanner means in an opposing second direction after a second of said intervals. Said linear scanner means includes a plurality of sensor elements disposed in a line perpendicular to said curved path, each of said elements being spaced from an adjacent said element a preselected distance; and said control means moves said linear scanner means in said first direction one-half of said preselected distance after said first interval and before said second interval. Said control means further moves said linear scanner means in said second direction one-half of said preselected distance after said second interval.

Thus a linear sensor may be provided for optical scanning of films and slides which are urged past a linear scan line. Typically, a mechanism oscillates the array laterally along a linear scan line in a direction transverse to the longitudinal direction of motion of the film or slide during the scanning process. By oscillating the linear sensor, pixels may be generated interposed between those conventionally generated by static linear sensor scans offset laterally from the conventional pixels, thereby effecting increased resolution to facilitate removal of image artifacts such as aliasing and the like with a linear sensor array previously achieving a more limited resolution.

An embodiment of the invention will now be described in detail by way of example only with reference to the following drawings:
Fig. 1 is a perspective view of a scanner;
Fig. 2 is a perspective view of the scanner of Fig. 1 with the cover removed;
Fig. 3 is a side view of the scanner of Fig. 2;
Fig. 4 is a front elevational view of the scanner of Fig. 2;
Fig. 5 is a front elevational view, partly in section, of a portion of the scanner of Fig. 2 illustrating part of the drum assembly and one mechanism for supporting the film about its circumference;
Fig. 6 is another view of the drum assembly similar to that of Fig. 5 illustrating another mechanism for supporting the film;
Fig. 7 is a simplified pictorial view of the drum assembly illustrating a mechanism for supporting a slide thereon;
Fig. 8 is a top view of a linear scan array and a film illustrating a scan pattern of the prior art;
Fig. 9 is a top view of a linear scan array illustrating a scan pattern;
Fig. 10 is a front, partially schematic view of the scan assembly, including the linear scan array of Fig. 1;
Fig. 11 is a frequency domain plot of a scan pattern of the prior art;
Fig. 12 is a spatial domain plot corresponding to the frequency domain plot of Fig. 11;
Fig. 13 is a frequency domain plot of a scan pattern;
Fig. 14 is a spatial domain plot corresponding to the frequency domain plot of Fig. 13;
Fig. 15A is a frequency domain plot of scan pattern of the prior art;
Fig. 15B is a frequency domain plot of a scan pattern; Fig. 16A is a spatial domain plot corresponding to the frequency domain plot of Fig. 15A;
Fig. 16B is a spatial domain plot corresponding to the frequency domain plot of Fig. 15B;
Fig. 17A is a frequency domain plot of another scan pattern;
Fig. 17B is a frequency domain plot of another scan pattern;
Fig. 18A is a spatial domain plot of the frequency plot of Fig. 17A;
Fig. 18B is a spatial domain plot corresponding to the frequency domain plot of Fig. 17B;
Fig. 19 is a simplified side elevational view of a portion of the scanner of Fig. 2 depicting the optical path of scanning light from the source, through the lens assembly, to the scanner assembly, and further illustrating a means for retaining the film on the drum assembly;
Fig. 20 is another view similar to that of Fig. 19, illustrating a mechanism for retaining a slide on the drum assembly;
Fig. 21 is a partial sectioned pictorial view of the drum assembly of Fig. 7;
Fig. 22 is a sectioned view of a portion of the drum assembly of Fig. 21, illustrating one form of a film support shoulder thereof;
Fig. 23 is another view of the drum assembly similar to that of Fig. 21, illustrating another form of film support;
Fig. 24 is a sectioned view of a portion of the drum assembly of Fig. 23, illustrating an alternate embodiment of a support shoulder with a film retainer;
Fig. 25 is a partial front section of a drum assembly of Fig. 7 taken along line 7-7 illustrating one mechanism for retaining slides thereon;
Fig. 26 is a partial front section of another drum assembly similar to that of Fig. 25 illustrating another mechanism for retaining a filmstrip thereon;
Fig. 27 is a partial front section of another drum assembly similar to that of Fig. 25 illustrating another mechanism for retaining slides thereon;
Fig. 28 is an illustration of a scan of a piece of film including, for illustrative purposes, a grid image in the image and further depicting deformation of the grid image after scanning caused by curvature of the film during the scan;
Fig. 29 illustrates a corrected grid image in comparison with that of Fig. 28;
Fig. 30 is a functional block diagram illustrating the various electrical components of the scanner of Fig. 1.
Fig. 31 is a schematic illustration of the geometry involved in the scanning process.

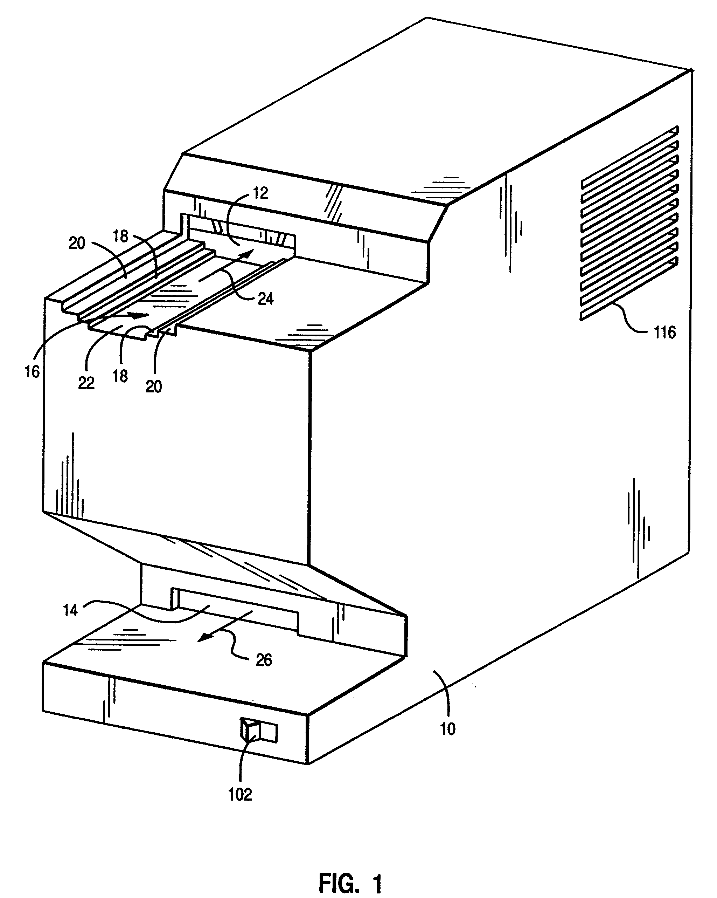

Referring first to Fig. 1, a pictorial view of a preferred embodiment of the film scanner is shown. A protective housing 10 is provided in which is disposed the various electrical, mechanical, and optical subsystems to be hereinafter described in greater detail. It will be helpful to provide a very general description of the operation of the scanner first in order to facilitate an understanding of the description of the operation of the various components. The scanner is provided with a film entry aperture 12 and film exit aperture 14. A strip of film or slide is introduced in the aperture 12 in a manner to be described in the direction of arrow 24. Upon its introduction therein, a transport mechanism internal to the housing 10 translates the film or slide through a semicircular path around a drum assembly enclosed within the housing 10. Thus, the film or slide is urged toward the back of the housing 10 and downwards, whereupon after it is scanned, it exits the exit aperture 14 in the direction of arrow 26.

Still referring to Fig. 1, a film-guide channel 16 is preferably provided as part of the housing 10 and will be seen to include a plurality of pairs of guide shoulders 18, 20 and a guide surface 22, all of which lie in respective parallel planes. The purpose of such shoulders and surface is to accommodate film and transparencies of differing widths and to ensure that upon their introduction in the aperture 12, they are received by the transporting drum assembly in proper registry and orientation so that they may be temporarily reliably retained on the outer surface of the drum assembly during their traverse through the scanning path so as to maintain the integrity and resolution of the scan.

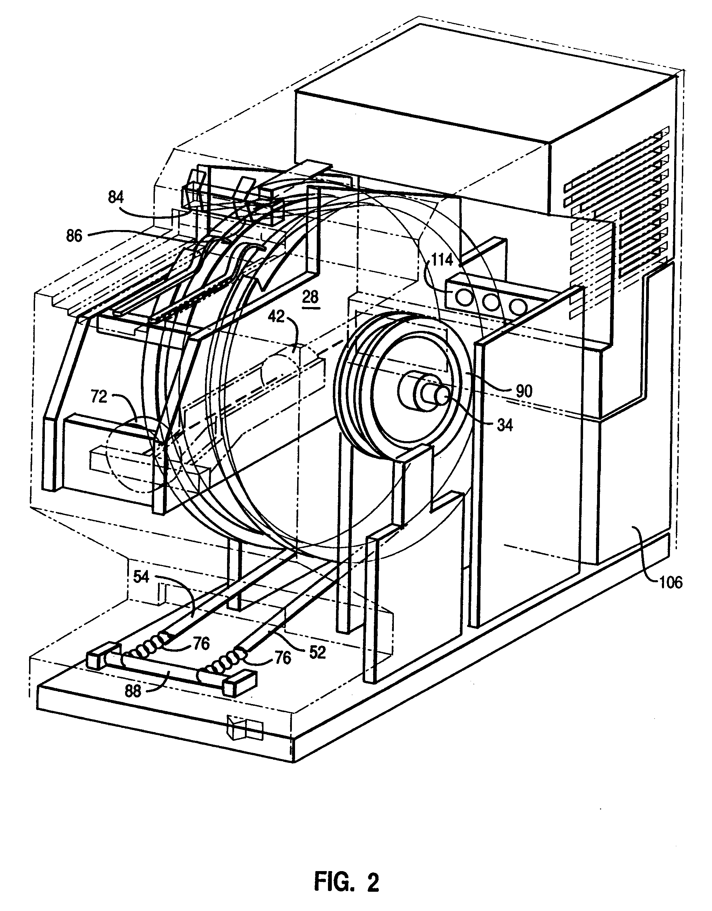

Accordingly, in operation, a slide or film will be introduced into the film/slide guide area 16 so that it is parallel to the guide surface 22 and either resting upon the guide surface 22 or resting with its opposing outer surfaces on the appropriate guide shoulders 18 or 20 (depending, of course, upon the width of the particular filmstrip or slide). The operator will then manually urge the film or slide along the direction of arrow 24, utilizing this guide surface or shoulders to maintain the orientation of the film/slide along the axis of arrow 24 until the film/slide is introduced sufficiently into the aperture 12 so as to contact the drum assembly (to be shown with reference to Fig. 2).

Upon urging the film/slide sufficiently into the aperture 12, the drum assembly will grasp the filmstrip or slide, drawing it further within the aperture 12 until it is within the housing 10. Upon engagement of the film/slide by the drum assembly, the operator is no longer required to contact the film/slide, as the translation and scanning operation are thereafter automatic and internal to the housing 10, after completion of which the operator may retrieve the scanned film/slide which will be expelled at the aperture 14.

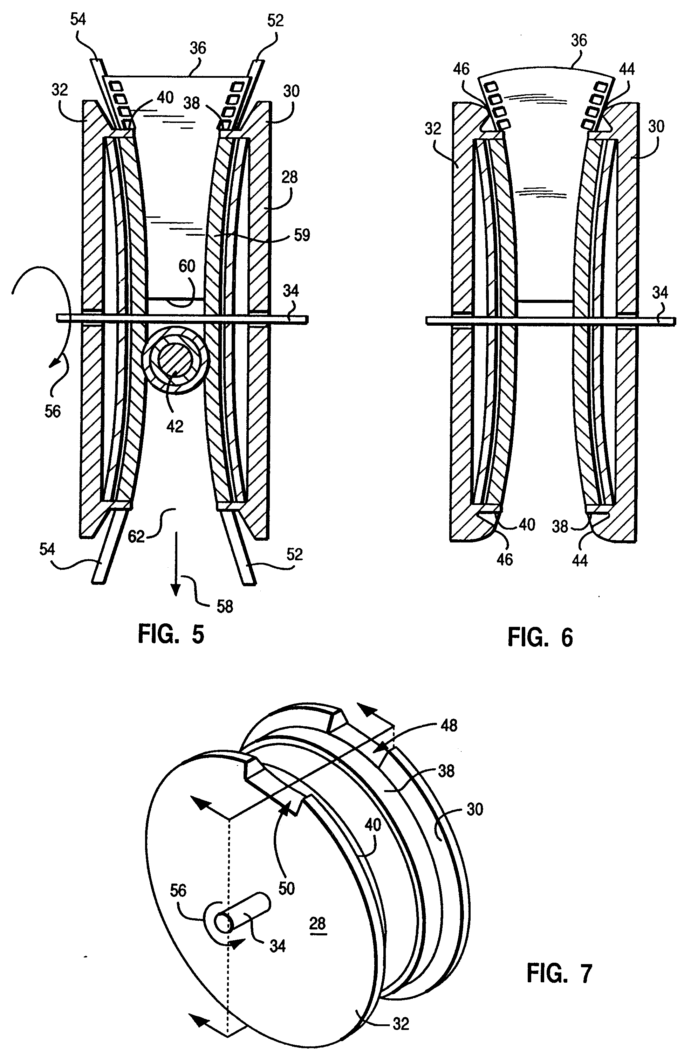

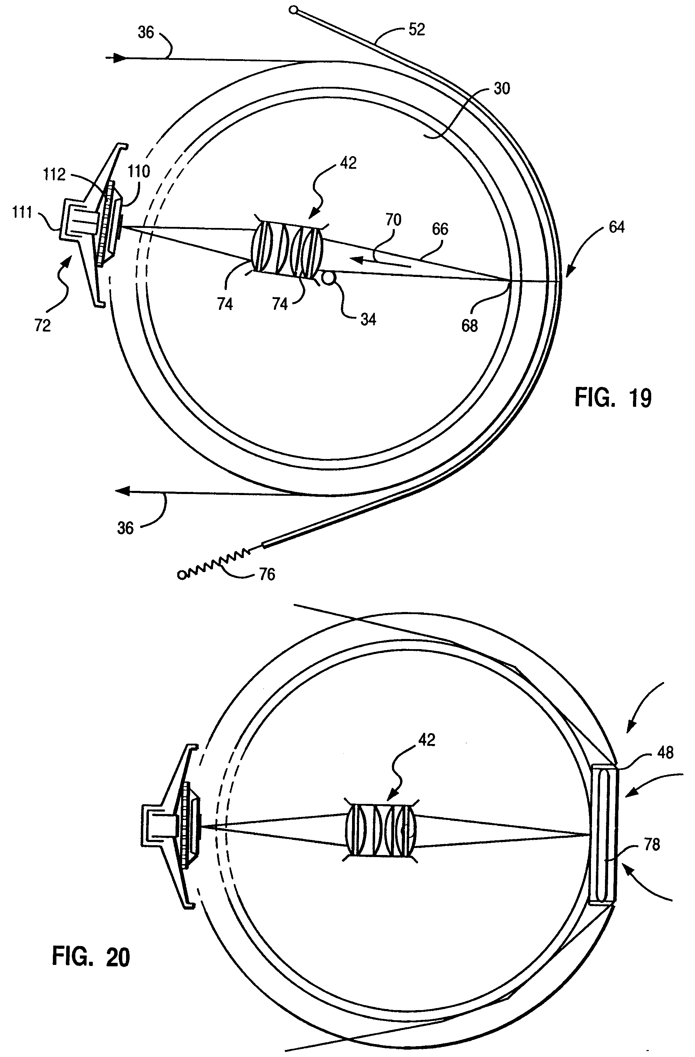

In order to more easily comprehend the various mechanisms depicted in Fig. 2 (which is an illustration of the scanner of Fig. 1 with the housing 10 removed), it will first be helpful to understand in a very general sense with reference to Fig. 5 and 19, how the film/slide is transported internally of the scanner and the optical path of the scan itself (Fig. 19).

Beginning with Fig. 5, the internals of the scanner, in a preferred embodiment, will include a drum assembly 28 (also shown pictorially in Fig. 7). The drum assembly will be seen to be comprised of a right and left disk-shaped half, 30, 32 which are symmetrical about an axis of symmetry in the direction of arrow 58 of Fig. 5. Each of these right and left halves of the drum assembly are supported by an axle 34 such that they may readily rotate about the axle 34 as shown by arrow 56.

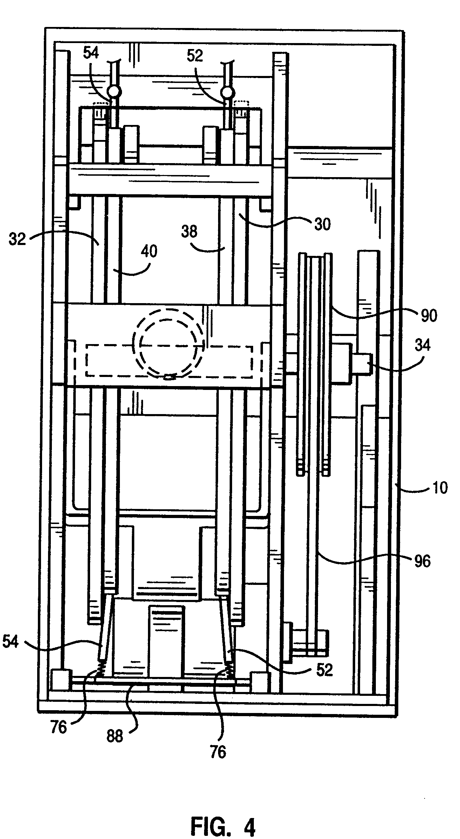

A close view of the drum assembly 28 indicates that the right and left half thereof are provided with a respective right and left film support shoulder, 38, 40. Referring briefly back to Fig. 1, when the filmstrip is introduced in the upper film entry aperture 12, it will be travelling in the direction into the paper at the top of Fig. 5 as illustrated therein. As the filmstrip 36 is introduced further into the housing, it will eventually (due to the registry provided by the guide area 16 or guide shoulders 18, 20, be caused to be supported by the film support shoulders 38, 40, as shown in Fig. 4. A right and left film/slide retention band 52, 54, are provided to gently and releasably hold the opposing outer edges of the filmstrip 36 against the outer surfaces of the film support shoulders 38 and 40.

As the drum assembly halves 30 and 32 are made to rotate about the shaft 34 in the direction of arrow 56, it will thus be appreciated that the filmstrip 36 will continue to be drawn into the film entry aperture 12 of Fig. 1 and, as the filmstrip rotates with the drum halves while supported on the support shoulders 38 and 40, eventually the leading edge of the filmstrip, 60, will traverse in a semicircular path around the axle 34 in the direction of arrow 56 until it reaches the vicinity of the arrow 58. Upon its further rotational translation in the direction of arrow 58, this leading edge 60 of the filmstrip 36 will eventually appear in the exit aperture 14, at which point the operator may remove the film. Thus the leading edge of the film 60 will ultimately be translated to location 62 and then in the direction of arrow 58, out the aperture 14.

The optical path of the scanning process will now be described in further detail with reference to Figs. 5 and 19. First, in Fig. 5, a lens assembly 42 is shown (which may also be seen in Fig. 19) which includes a plurality of focusing lenses 74. A light source 114 (shown in Fig. 2) is disposed internally of the housing 10 at a light source location 64 shown in Fig. 19. Disposed in a substantially diametrically opposed location from the light source is a transducer/scanner assembly 72 which includes a transducer 110 (preferably a linear array, part number TCD1300D by Toshiba) and appropriate scanner control circuitry 112.

Still referring to Fig. 19, as light 66 is emitted from the light source 114 at location 64, it will be seen to travel through the film in the direction of the arrow 70, whereupon it is focused by the lens assembly 42 onto the transducer 110. Inasmuch as the film 36 is being rotationally translated through and across the optical path just described from the location 64 through lens assembly 42 to the transducer/scanner assembly 72, it will be readily appreciated that the light being picked up by the transducer 10 will, over time, result in a scan of the images contained in the film 36 as it traverses on the circumference of the drum assembly through this optical path. In passing, it will be noted that due to the presence of the support axle 34 in Fig. 19, the transducer/scan assembly 72 and light source at location 64, in the embodiment depicted, will preferably not be in diametrically opposing relation because the axle 34 would thereby be along the optical path shown by arrow 70 interfering with the image to be scanned.

Referring to Fig. 6, a comparison to Fig. 5 will reveal that an alternate embodiment is shown for ensuring that the film 36 is releasably yet reliably attached to the right and left drum halves 30, 32, during the scan process. In this embodiment, right and left film retention ridges 44, 46, are provided in the respective drum assembly halves which extend circumferentially about their respective halves, serving the purpose essentially of the retention bands 52 and 54 of Fig. 5 and obviating their need.

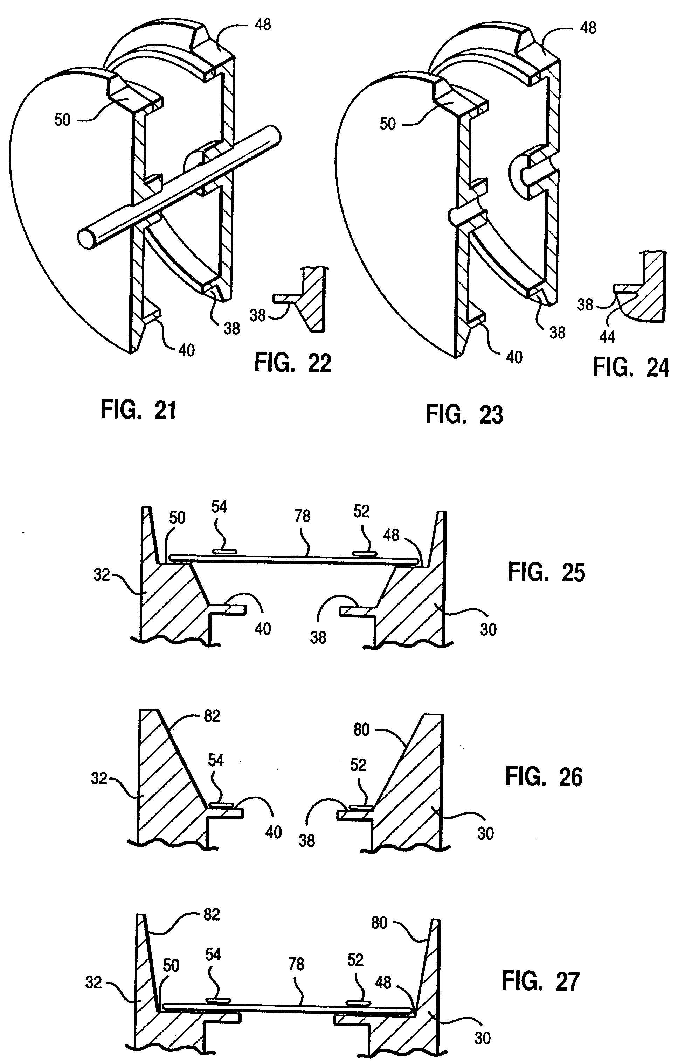

Turning briefly to Fig. 7, it is desirable to accommodate in a single scanner not only filmstrips but slide transparencies as well. Accordingly, referring to Fig. 7, there will be seen depicted there in the right and left halves 30, 32, of the drum assembly 28, and a corresponding right and left slide support slot 48, 50, disposed in the respective drum assembly halves 30, 32. When a slide is introduced into the entry aperture 12 of Fig. 1 (either as it rests on the guide shoulder pair 18, 20, or slides along the guide surface 22, as the drum assembly 28 rotates in the direction of arrow 56 (Fig. 7), eventually these slide slots 48, 50, will be in the vicinity of the entry aperture 12. By the operator continuing to urge the slide into the aperture 12, eventually it will come to rest in and be supported by the slide slots 48, 50. This may also be seen in Figs. 20 and 25-27. As was the case with a filmstrip 36, in a preferred embodiment the film/slide retention bands 52, 54, will serve essentially the same purpose they did with the filmstrip 36, namely to firmly but releasably cause the slide 78 to be retained in the slide slots 48, 50 (Fig. 7) as the slide is transported in the semicircular path circumferentially on the drum assembly about the axis 34 in the direction of arrow 56. It will be noted in passing with reference to Figs. 25-27, that in a preferred embodiment, each of the drum halves 30, 32, will be provided with tapered shoulders 80, 82, such that the slide 78, as it is introduced into the support slots 48, 50, will be guided into registry such that the slide 78 will be retained in alignment gently by the walls of the tapered shoulders 80, 82, when the slide comes to rest on the bottom of slots 48, 50. While only one slot pair 48, 50, is shown in Fig. 7, this was done for simplicity of illustration. It will be readily apparent that with only one such slot pair, the operator would have to wait during introduction of a slide in the entry aperture 12 until this slot pair had rotated around into position to receive this slide through aperture 12. Accordingly, additional such slot pairs 48, 50, for receiving slides may be disposed about the circumference of the drum assembly 28 right and left halves 30, 32, so that a vacant such slot pair will be ready to receive a slide in a more timely fashion. An additional benefit to providing for multiple such slide slot pairs 48, 50 is that a plurality of slides may thereby be introduced and engaged in the scanning process at a given time disposed about the drum assembly 28 at numerous locations.

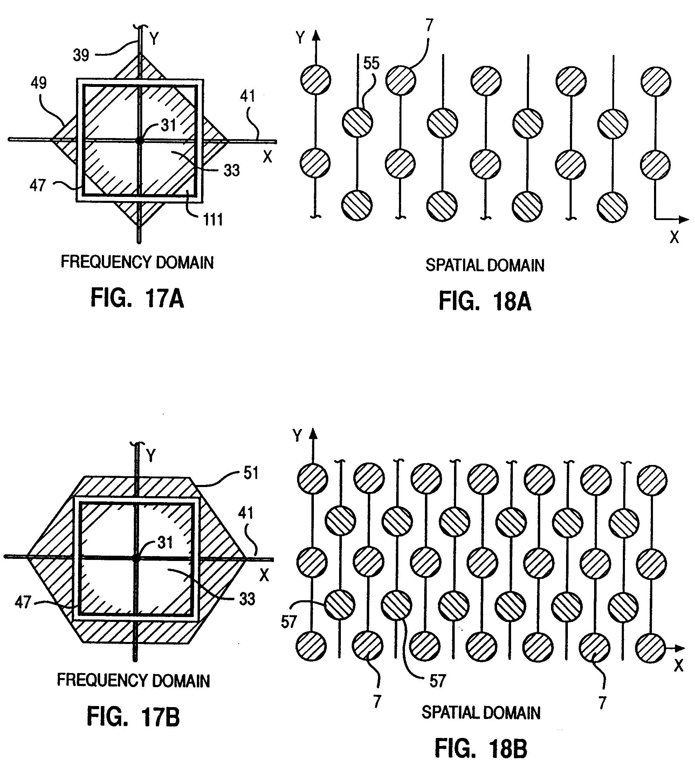

Now that the general physical operation of the scanner has been described, the components illustrated in Fig. 2 and their respective purposes may now be understood more easily. Thus, in Fig. 2, the drum assembly may be seen, 28, supported by the axle 34. Similarly, the light source 114, lens assembly 42, and transducer/scan assembly 72 may be seen. Additionally, two upper retention band terminations 84, 86, are shown and a lower retention band termination block 88. These serve to tether or terminate opposite ends of each of the retention bands 52, 54. It may be desirable to provide for springs 76 terminating the bands 52, 54, which are disposed between the ends of the bands and the band termination block 88. The purpose of such springs is to provide some "give" to the bands as material (e.g. film or slides) are disposed between the bands and the outer circumference of the drum assembly halves 30, 32, which they contact in order to accommodate the thickness of the films and/or slides. Since the bands 52, 54, are terminated at both ends and the drum assembly 28 is in rotary motion contacting these bands, sliding friction will develop between the bands and the drum assembly 28. Accordingly, it has been found desirable for such bands 52, 54, to be fashioned out of a teflon or like substance to facilitate this sliding motion. The springs 76, may be selected so as to provide the necessary amount of tension whereby the film and slides may be readily introduced and "sandwiched" between the drum assembly 28 surfaces and the bands 52, 54. Also, in passing, it will be noted that a power supply 106 is provided which will be described in greater detail with reference to Fig. 17.

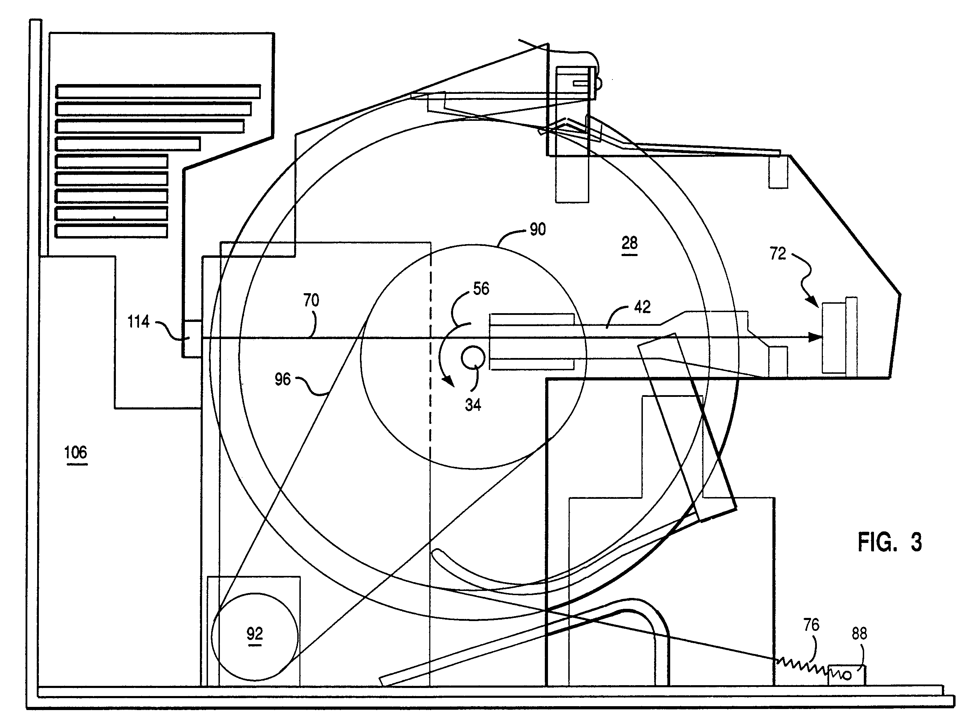

Turning to Fig. 3, a means is required for effecting the rotational translation of the drum assembly 28 about the axle 34. Accordingly, a suitable electric motor 92 is provided and a drive belt 96 interconnecting the motor 92 and drum drive wheel 90 so as to provide this rotational movement in the direction of arrow 56 of the drum assembly 28. The orientation of the light source 114, lens assembly 42, and transducer/scanner assembly 72 along the optical axis 70 may also be seen more clearly in Fig. 3.

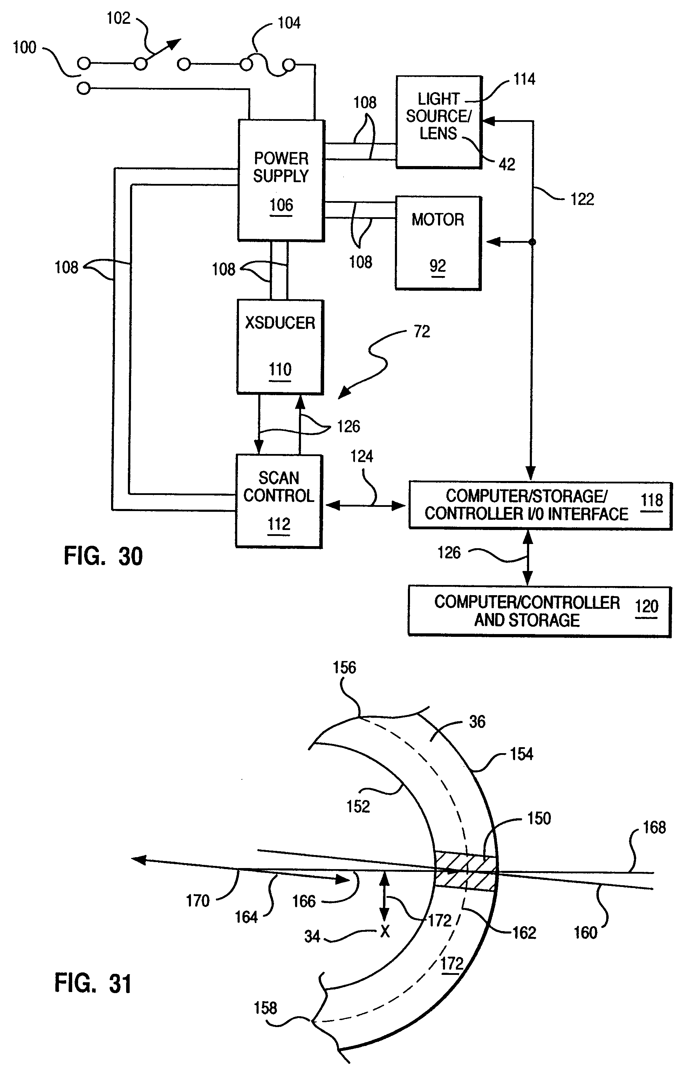

Turning to Fig. 30, it will be appreciated that various electrical and electronic circuits and components must be provided to effect the scanning. Accordingly, in Fig. 30, a functional block diagram of such circuitry and components is depicted. The scan assembly 72, motor 92, light source 114, lens 42, and power supply 108 already previously discussed, will be seen depicted therein. The scanner is provided with a connection 100 to a suitable source of external power such as a 110 volt A/C line. In accordance with conventional practice, a power switch 102 (also shown externally accessible in Fig. 1) will be provided in series with appropriate fusing 104 so as to energize the power supply. Dependent upon the particular motor, scan assembly 72, etc., which are employed, the general purpose power supply 106 depicted in Fig. 30 will generate the necessary supply of voltage as is appropriate to power the light source, lens, motor, transducer, scan control, and the like, delivering power to such various components over power lines 108.

It will be appreciated that the power developed by the supply 106 may take several forms as required by the various components, such as plus and minus DC voltages of various magnitudes, and the like.

Also shown in Fig. 30 is a computer storage controller I/O interface 118. Several different forms of scanner may be employed, depending upon the application, and thus may be substantially self contained and operated with an internal embedded controller or, in the alternative, may be intended to operate under control of an external computer or controller. In either case, means will be required for controlling operation of the various components just described and for at a minimum storing the scanning data derived from operation of the scanner (and even performing operations on such data if desired).

Accordingly, a general purpose functional block 118 has been shown to first illustrate that the various components in the scanner may, if desired, be controlled either by a computer or controller as an integral part of the scanner or controlled by an external such computer or controller. It may, for example, be desirable to alter the rotation of the motor 92 to effect changes in resolution or the like. Similarly, it may be desirable to alter the spectrum of the light source or even the focus or other operation of the lens assembly if electronically controllable. Similarly, it may be desirable to electronically control the scanning operation, e.g. the operation of the scan control 112 and even the transducer 110 itself. Accordingly, address/data/control lines 122, 124, have been shown extending from the computer/storage/controller I/O interface 118 to these various components, illustrating that in accordance with conventional computer science practices, these various functional sub-assemblies may be controlled as desired with these data address and control lines. The purpose of the I/O interface 118 is to provide an interface between these various sub-assemblies and components of the scanner and a computer, controller, and/or storage depicted generally as block 120. In its simplest sense, scanned data may be simply generated at the transducer 110, delivered over lines 126 to the scan controller 112, whereupon the scanned data is delivered on line 124 through I/O interface 118 to appropriate storage which may even be contained within the scanner if desired.

Similarly, an imbedded controller may be provided as a part of the scanner and shown as block 120. It will provide appropriate address, data, and command functions through the I/O interface 118 to the various components so as to internally control their operation in accordance with software associated with the controller much in the manner that modern appliances such as microwave ovens are controlled. In the alternative, when external image processing and control of the scanner is desired, the scanner may obviously be controlled and its data dumped to an external computer system also intended to be generally illustrated by block 120. In such an instance, an appropriate adapter such as a conventional parallel port connector may be provided in the scanner so as to facilitate this electrical connection of data address and control lines 122, 124, to an appropriate computer interface 118 and ultimately to the controlling computer 120. In such an instance, the computer will thus enable its operator or be enabled by appropriate software to control the various components depicted in the electrical/electronic circuitry of Fig. 30 of the scanner in any desired manner. For example, the computer 120 may be provided with a program adjusting the manner in which the scan is made by the transducer, in which case, appropriate address, command, and data signals will be carried through the interface 118 over lines 124 to the scan control 112 and ultimately the transducer 110 to effect the desired form of scanning and data transmission back to the computer 120. As yet another example, an operator may enter into the computer 120 by means of a keyboard or the like, data indicating a particular type of film medium being introduced to the scanner or desired resolution. This may have implications in the desired scan rate or even in the rate at which the film or slides should be made to translate on the drum about the axis. In such an instance, the computer 120 might, for example, generate appropriate address, data, and command signals on line 126 through the interface 118 on lines 122 to the motor 92 so as to adjust the motor speed.

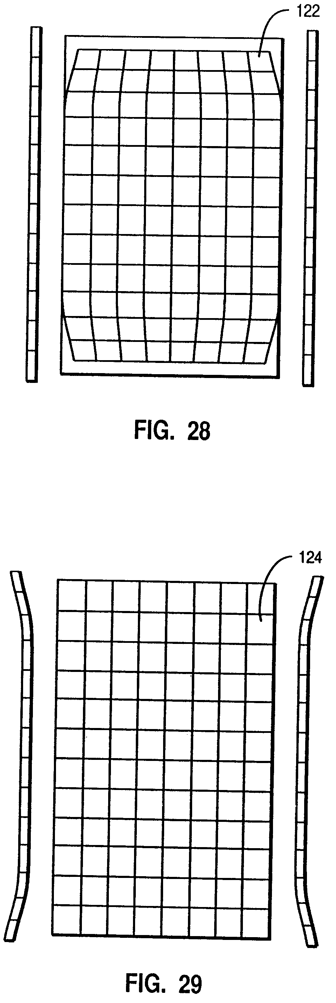

In Fig. 28, an illustration of a scanned image 122 is depicted therein, wherein the scan was performed when the film had a curvature during the scanning process. The actual rectilinear grid in the original medium was uniform. However, due to the curvature of the film during the scanning process, the grid became distorted as shown in the image 122 of Fig. 28. It is important to address the problem depicted in Fig. 28. As mentioned above, a solution afforded in the prior art to avoid such distortion of Fig. 28 was to simply provide a linear magazine in which the film or slide could reside which had a transparent cover forcing the film flat against the magazine so as to avoid curvature. This however resulted in scratching of the film, leading to other distortions in the resulting scanned image. Distortion correction in accordance with the present invention desirably employs the reticles 59 of Fig. 5 previously discussed which provide precise reference points along the longitudinal dimension of the film.

Moreover, as a result of the various means described above, curvature of the film is practically avoided, resulting in the desired accurate scanned image 124, such as that depicted in Fig. 29. The curvature in the resulting scanned image is avoided by transporting the film along an arcuate path whereby at the point of scan the film is thereby in an essentially flattened state. Such means for holding the film in the correct orientation are depicted, for example, in Figs. 5 and 6, employing bands 52, 54, for example, or the film retention ridges 44, 46.

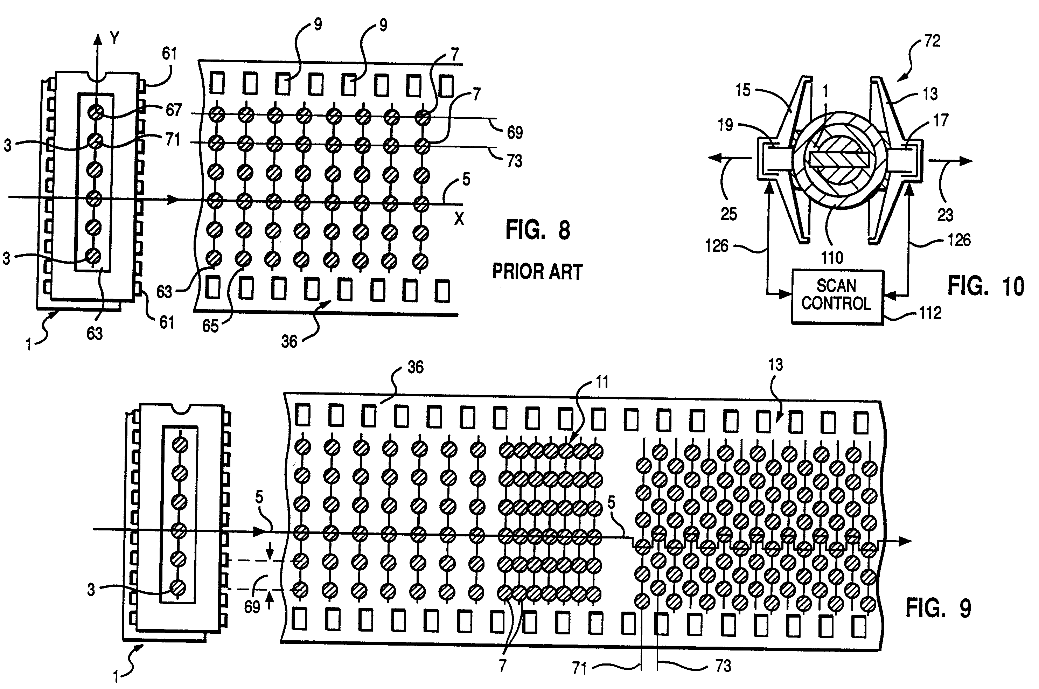

Turning now to Fig. 10, there is disclosed a system for moving the array 1 of Fig. 8 in the Y axis (alternately in the directions of arrows 23 and 25. The scan assembly 72 comprises transducer 110 which houses the linear sensor array 1, a scan control 112, and a pair of speakers 13, 15. The transducer and scan control may be seen depicted schematically in the system with reference to Fig. 30. Each speaker includes a small respective coil 17, 19 which normally serves the purpose of moving the cone of a loudspeaker inward and outward in a conventional manner to produce sound. However in the embodiment depicted in Fig. 10, the lightweight transducer 110 and thus the linear array 1 are mechanically interconnected to the speakers 13, 15. Upon energizing the coils 17, 19 in an appropriate manner in response to control signals 126 from the scan control 112, these energized coils cause their respective speaker cones to be urged in the direction of the arrows 23, 25, dependent, of course, upon the phase or polarity of the particular signals 126. It will readily be appreciated that this motion of the cones of the speakers will in turn impart the desired lateral motion in the direction of arrows 23, 25, to the transducer 110 and ultimately the array 1 mounted thereon. It will be noted that the magnitude of motion required is relatively small. For example, for a 2048 element array across a typical 30 millimeter film field, the required motion is only 10 or so wavelengths of yellow light. Such motion may be effected by energizing the speakers with a few millivolts applied out of phase to the speakers, thereby resulting in movement of the lens assembly and the array. It will further be noted that the controlling signals 126 are, in turn, generated under and in response to computer control from a computer 120 such that the linear motion may be effected as required in the particular application to adjust for inertia of the transducer assembly and the like. An alternative arrangement is for the assembly 110 to contain only the lens, the array 1 being statically mounted in back. Moving the lens laterally effectively moves the image on the array. Similarly, just the array 1 or even the film being scanned could be moved laterally.

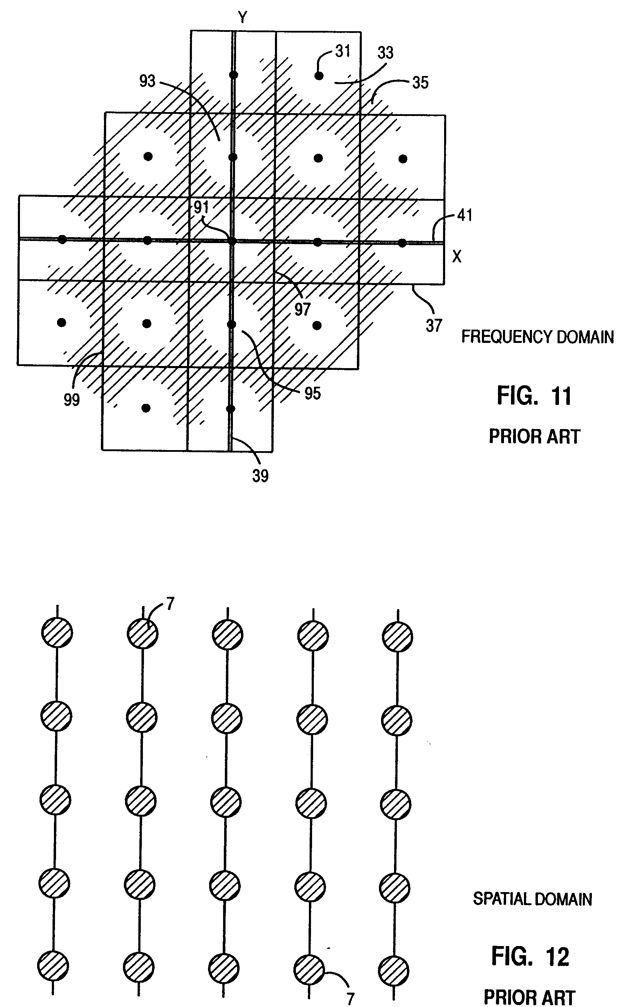

Turning now to Fig. 11, a more detailed description of the scanning in the spatial and frequency domains will be provided. Fig. 12 illustrates a typical rectangular spatial arrangement of pixels 7 on a square grid in accordance with the prior art. Fig. 11 is the correlative frequency domain illustration of the pixels in the spatial domain of Fig. 12. The intersection of the X and Y axis, 41, 39, at the center of the illustration corresponds to the lowest frequency, e.g. the constant white term represented by a white "O" 91 in the center of the figure. The other "O's" 93, 95, etc. above and below the center 091 represent the high frequency aliases, or false mirrors of the center 091, caused in the sampling processes, as is well known in sampling theory as developed by Nyquist. Other grids which mimic a constant term are shown by other white "O's" in the frequency domain such as that shown at reference numeral 33.

Around the center "O" 91, and extending exactly halfway to the adjacent alias origin "O's" is the Nyquist bandwidth in two dimensions shown by the center bold square 97. This is the locus of reproducible frequencies given the assumption that the lowest candidate frequency is the correct one. The other squares such as that shown at reference numeral 99 mirror the information in this lowest square 97.

To the extent that the sensors 3 in the array 1 are sensitive to detail beyond the center bold Nyquist square 97, such detail will be "aliased" or reflected back to a false frequency within the Nyquist square, thereby resulting in shimmer, staircasing, and other undesirable effects in the resultant scanned image. Unless the sensors 3 have a response approaching an ideal "brick wall" sinc response (which is unrealizable passively because of rings of negative sensitivity), then the higher reproducible frequencies will be adversely infested by aliases. With the proper blurring, low frequencies in the center white circle 91 reproduce clearly, overpowering the very high aliasable frequencies which are removed by the blurring. Higher frequencies in the shaded areas of Fig. 11 are weakened by the blurring and affected with such aliases from only slightly higher frequencies mirrored across the line forming the edge of the bold center square. Across the border lines of the central square 97, the aliases are stronger than the signal, and the best interpretation removes these entirely.

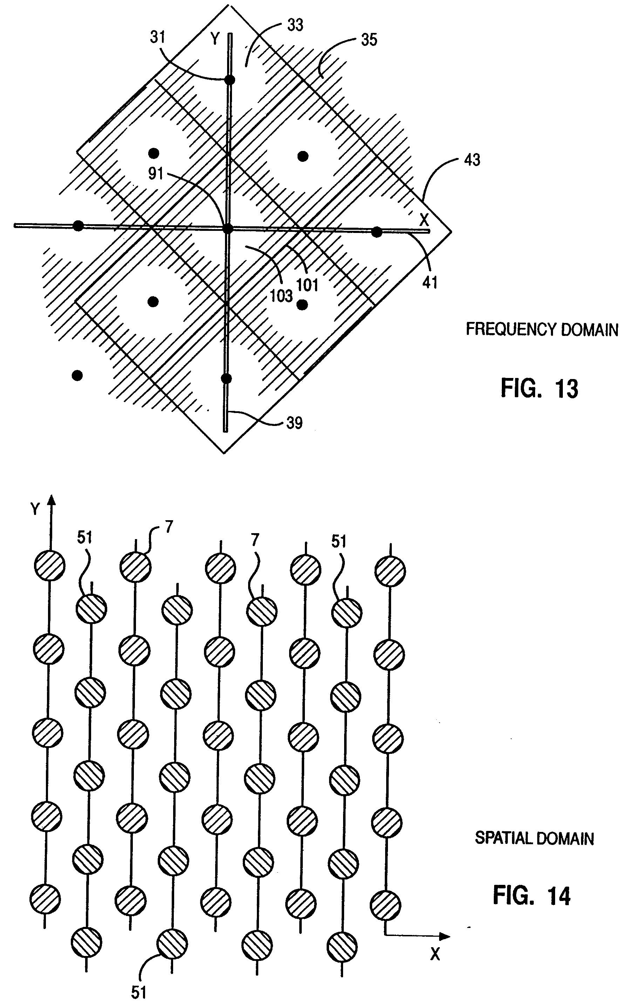

Referring now to Figs. 13 and 14, a comparison to corresponding Figs. 11 and 12 which showed spatial and frequency domain aspects of prior art scanning, will reveal differences associated with scanning in accordance with the invention. As with Fig. 12, Fig. 14 is a spatial domain plot which, when compared to prior art Fig. 12, indicates a doubling of the number of scan lines. In other words, a new set of pixels 51 aligned in vertical lines are interposed between the lines of pixels 7 generated in accordance with prior art scanning techniques of Fig. 12.

Yet an additional difference may be noted in Fig. 14, namely that these new lines of pixels 51 are offset in the vertical direction from pixels 7 by half a pixel, resulting from the previously described oscillation of the array 1 in the Y direction by one half of the distance 69 (Figs. 8, 9). Looking at Fig. 13 now, which is a representation of the frequency domain resulting from the scan giving rise to the spatial domain illustration of Fig. 14, in this frequency domain illustration it will be noted that half of the alias origin "O's" are no longer present. For example, the white "O's" in the prior Fig. 11 just above and below the center (e.g. circles 93, 95) that represented a high frequency horizontal grid with a white line through each pixel row and a black line therebetween, are no longer present in Fig. 13. This is because there are now twice as many "rows" to catch both the white and black lines. This new center bold Nyquist "square" 101 in Fig. 13 has doubled in area relative to the Nyquist square 97 of Fig. 11 and has been rotated on its axis to form a diamond. The diamond shape results from using the lowest frequency interpretation of each pattern of pixels, as before.

In general, the area of this Nyquist region 101 is proportional to the number of scanned pixels per unit area. The area of the white circle 103 (which represents the prime alias-free frequencies) also has approximately doubled in Fig. 13 because the aliasable frequencies are moved farther away from the center 91. In U.S. patent 4,520,391, issued May 28, 1985, and incorporated herein by reference, it is explained in greater detail that the diamond shaped bandwidth 101 is preferable for storage and transmission to the square 97 of Fig. 11. This is because it matches the diamond shaped energy spectrum of the real world and the diamond shaped sensitivity response of the human eye.

Normally a square bandwidth with square pixels is desired as the product image, and thus intermediate processing of input pixels is required. A simple and highly accurate technique for resizing in two dimensions utilizing two one-dimensional steps involves first, resizing each one-dimensional scan line column to the desired vertical pixel positions of the square pixel product image. Secondly, each row of the scan lines is resized, resulting from the prior step in order to form the product image. It has been found that this method works even with the alternate offsetting of scan lines. The intermediate result from the first step will contain obvious aliases added to the true image. However, the offset scanning by moving the array 1, causes the sign of the added aliases to alternate between adjacent columns. Accordingly, in the second step of the hereinabove noted technique for intermediate processing of input pixels, aliases are trimmed off while, at the same time, highest frequencies beyond the resolution of the output image are in like manner trimmed.

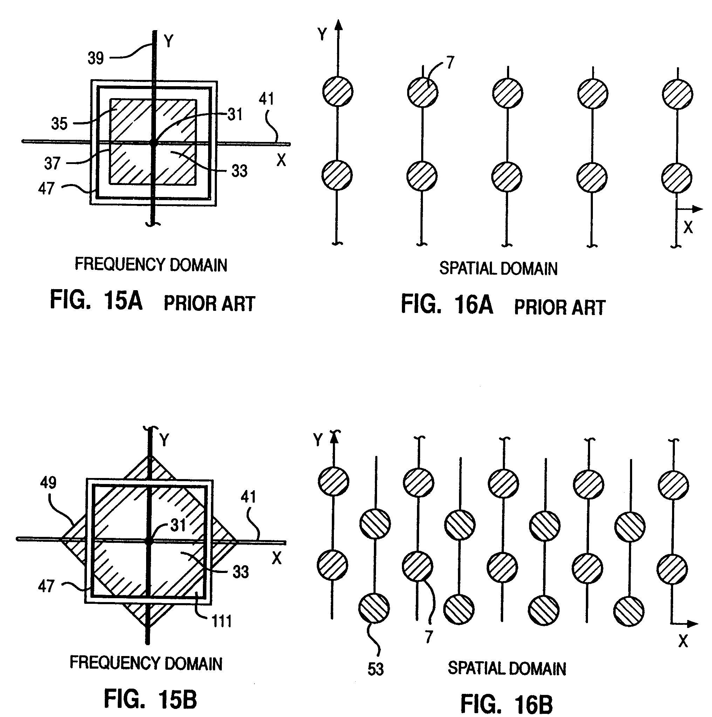

Turning now to Figs. 15 and 16, such illustrations are drawn to scale in order to show in detail how such aliases are trimmed. Figs. 15A and 16A represent prior art square pixels in the spatial domain (Fig. 16A) and in the frequency domain (Fig. 15A). In particular, it will be noted that in the frequency domain of Fig. 15A, certain effects result when an attempt is made to increase resolution by 33% to be hereinafter discussed. The Figs. 15B and 16B, of course, represent the results in the frequency and spatial domains, respectively, when utilizing offset pixel columns.

Thus, in a comparison of Fig. 16B with Fig. 16A, the additional columns of pixels 53 are shown resulting from the additional offset scans interposed between the pixels 7 resulting from conventional scans. The dark bold squares (reference numeral 47) in Figures 15A and 15B represent the bandwidth of the output image, whereas the bold shapes (reference numeral 37 in Figures 15A and 49 in Figure 15B) represent the Nyquist bandwidth of the original scan which ideally circumscribes the bandwidth of the output image. As with Fig. 15A, the white circle 33 in Fig. 16B depicts the central clear channel. In 15A the output resolution was chosen to be 33% higher than the scanned resolution, resulting in empty bandwidth between the scanned resolution 35 and output resolution 47. The additional columns of pixels 53 in Figure 16B result in the increased scanned resolutions bandwidth 49 of Figure 15B, which may be seen to fill all but the extreme corners 111 of this selected output resolutions bandwidth 47, shown identically in Figures 15A and 15B.

In the prior art scanning of Figs. 15A, 16A, with square pixels, the highest frequencies are simply not available. This corresponds to seeking to obtain 2,731 pixels (e.g. a 33% increase) from a 2,048 element array, for example. A good processing strategy would filter out the higher frequencies with only the small white circle 33 representing the lower frequencies being capturable with clarity.

Still referring to Figs. 15B and 16B, which represent the effect of doubling the scan lines and pixels, it will be seen that only the extreme corners of the output square 47 extend beyond the captured diamond bandwidth 49. Because the real world contains less detail in the diagonals, and further because the human eye is less sensitive to diagonals, these small patches of aliases shown as the white corners 111, for practical purposes, may be ignored. It will also be noted with reference to Fig. 15B that the area of the central clear channel shown by the white circle 33 in Fig. 15B has doubled relative to the correlative central clear channel shown by the circle 33 of Fig. 15A (resulting from non-offset scanning of the prior art) - such increased area resulting in a visually cleaner image.

Referring now to Figs. 17-18, again, as with Figs. 15 and 16, Figs. 17A and 17B are frequency domain plots corresponding to spatial domain plots of Figs. 18A and 18B, wherein again, in keeping with the invention, offset scanning is employed. However, a comparison of Fig. 18B to either Fig. 18A or Fig. 16B indicates that whereas horizontal resolution was increased by a factor of 2 in the offset scanning of the invention in Figs. 16B and 18A, in Fig. 18B, horizontal resolution has even been further increased by a factor of 2 sq. root 3. This may be geometrically appreciated by comparing Figs. 18A and 18B wherein it will be apparent that between alternate columns of Fig. 18A, an additional column now appears in Fig. 18B corresponding to the fact that the horizontal resolution has increased.

The effect of increased horizontal resolution by the factor of 2 times the square root of 3 may be visualized by expanding the area of the frequency domain plot of the earlier illustration of Fig. 15 by square root of 3. The lowest frequency interpretation rule would fill the frequency space with hexagons 51, in this case, rather than diamonds, as shown in Fig. 17B. The hexagon 51 is a better fit to the square 47 than an enlarged diamond (e.g. one larger than diamond 49 of Fig. 17A).

Thus, in the example of Fig. 17B, none of the final square 47 is outside the Nyquist bandwidth. The white circle 33 of Fig. 17B, representing the prime responsivity, also becomes enlarged relative to the circle 33 of Fig. 17A proportionately to cover all of the important areas of the final square 47 for a very clean image.

The hexagonal structure of the frequency domain shown in Fig. 17B is a preferred embodiment. The output resolution may be seen to have been enlarged by a factor of 1.33, and the total of output pixels has thereby increased by the square of this resolution growth factor (e.g. 1.33 x 1.33) to a total of 1.78. The signal-to-noise ratio with a fixed light is the same as if the physical array 1 were made with 1.33 times more pixels. Moreover, the number of scanned pixels thereby increases by a factor of 3.46, and by employing the resizing method noted above the necessary processing time would increase essentially by the same amount. Very importantly, however, the spatial frequency area of best reproduction of the image also will be seen to have increased by a factor of 3.46 to cover almost all of the output bandwidth, and the increase in scanned pixels enables the rectilinearization resize without artifacts. It will be noted that the conversion to the square grid thus described, the rectilinearization, and the resolution correction all fold into an identical convolution. It is preferable that such steps of conversion to the square grid, rectilinearization, and resolution correction be effected in one step.

To maximize effective array modulation transfer function (e.g. frequency response or MTF), it is desirable to minimize motion of the array during image integration. It will further be noted that pixel fill has not been determined to be a problem with the implementation described herein because of the provision for oversampling. Accordingly, in a preferred embodiment, the image is stepped forward at array reset time, and then held constant during integration. Lateral motion of the speakers would thus ideally take the form of a square wave (which of course may be approximated by appropriate control signals) with the transition in the opposite direction occurring just as the array 1 is being reset for a new integration.

In a preferred embodiment of the scanner, as aforesaid, not only is the image scanned, but as a result of the increased resolution, a control track on either side of the image disposed on the inner surfaces of the film support shoulders is also scanned. In a typical representative embodiment, it may be necessary to resolve 2,048 pixels across an image to meet industry standards. In implementations of scanners it has further been found necessary in some applications to minimize image artifacts such as aliasing, and to correct for errors with digital resizing (utilizing the control track), therefore requiring some level of oversampling. As previously noted, the prior art attempted to solve these problems by merely substituting a sensor array having a higher level of sensitivity provided, e.g., by a much more expensive 4,096 element array. From the foregoing, it will be appreciated that the hereinbefore noted problems have been met with a 2,048 element array providing interlacing as described, with no compromise in quality, thereby resulting in a low cost scanner implementation.

Continuing with a more detailed description of a preferred embodiment of a scanner employing the linear sensor array, on the inner surface of the right and left film support shoulders 38 and 40, a respective reticle will be imprinted (Fig. 5). From the foregoing it will apparent that the scanner assembly will be looking in the direction into the page toward the lens assembly 42 and will thus be capable of scanning the reticles 59 as well as the inner surface of the film 36. Because the film is being transported along a drum assembly during the scan process and is stationary with respect to the drum assembly, the reticles 52 will provide a means for locating points in space and time along the longitudinal axis of the film 36 during the scanning process. Thus, these reticles 59 may serve as timing tracks or position locators during a scanning process. The scanning assembly would simply scan and recognize these gradient marks, translate and analyze them, and thereafter correlate them to the respective scan lines.

One simple example of use of such a feature is that after the scan process, in examining the image if it is desirable to index back to the particular location on the film, for example to scan at a higher resolution, these reticles 59 make this possible. The motor controller driving the stepping motor which turns the axis 34 would simply generate the appropriate commands to the motor to cause rotation of the drum so that the desired area of the film to be re-scanned at a higher resolution will be located appropriately in line with the light source, lens assembly, and scanner assembly.

Turning now to Fig. 8, a linear sensor array 1 is shown depicted therein which corresponds to the transducer 110 shown in Fig. 19 as a component of the film scanner. Such arrays are well known in the art, a representative example of which is the TCD1300D by Toshiba.

Typically such an array 1 is fabricated with processes well known in the art more commonly associated with fabrication of integrated circuits resulting in a plurality of sensor elements 3 arranged in a line along a Y axis transverse to the longitudinal X axis 5 of the film 36 when the array 1 is disposed within the film scanner 10. The array 1, in a conventional fabrication, will include a plurality of electrical leads 61, typically in the form of a dip package well known in the art, the purpose of which is to provide electrical input and output connections to the substrates of the array 1 and, more particularly, to the sensors 3. In this manner, electrical signals may be monitored on the terminals 61 which will correspond to light impinging upon the elements 3. The array 1 serves the function of converting the light into electrical properties monitorable on the terminals 61. A protective optical window 63 is typically included as part of the array which permits transmission of the light from the film 36 being scanned to pass through the window 63 and impinge upon the plurality of sensor elements 3, thereby generating the signals monitored at the output terminals 61.

Continuing with Fig. 8, such an array may have as many as 1024, 2048, or even 4096 individual elements 3 arranged linearly along the Y axis depicted. Obviously, for simplicity of illustration, the number of such elements shown in Fig. 8 and the subsequent accompanying figures has been greatly reduced to 6, although the invention is not intended to be limited to any particular number of such elements. By orienting the array 1 such that the elements 3 lie along a line in the Y direction transverse to the longitudinal X axis 5 and direction of motion during scanning of the film 36, sampling of the elements 3 periodically as the film 36 traverses along the axis 5 past the array 1 will result in a plurality of signals being generated on the terminals 61, each corresponding to a pixel and a portion of the image shown at reference numerals 7.

For clarity, it will therefore be understood that the element 67 will generate a series of signals corresponding to the pixels 7 lying along line 69. Similarly, the element 71 will generate a plurality of signals on respective terminals 61 corresponding to pixels 7 lying along line 73 as the film 36 traverses past the scan line which lies along the Y axis.

In summary then, with respect to the prior art, in Fig. 8 the array of a plurality of sensors arranged in a line has been shown, which would be referred to in the art as a "6 element linear array". The film 36 passes over this array 1 in a horizontal motion in the direction of X axis 5 as the 6 pixels (such as those shown at reference numeral 7) lying in a vertical line parallel to the Y axis are repetitively "captured" by their respective sensor elements 3 in the array 1. It is significant to note that in the prior art there was no vertical motion imparted to the array 1 or film 36 in the Y axis, thereby resulting in generation of signals corresponding to the pels in a rectangular pattern as shown.

Turning now to Fig. 9, in the prior art it was found that the horizontal resolution could be increased as desired by slowing down the horizontal motion of the film 36 relative to the sampling intervals at which the elements 3 were sampled. Doing so would result in an increased number of pels 7 in the horizontal direction of X axis 5 per unit of film. This may be seen illustrated in Fig. 9 in region 11 where there is an obviously increased density of pels per unit of space in the horizontal direction relative to the groups of pels immediately to the left of region 11 on the film 36.

It is important to note in Fig. 9 that notwithstanding that horizontal resolution could be increased by slowing the horizontal motion, in the prior art the number of elements 3 in the array 1 determined and fixed the vertical resolution. In order to obtain increased vertical resolution, the prior art solution was simply to employ an array 1 having an increased number of elements, thereby resulting in significantly increased cost associated with such higher resolution linear arrays. However, as taught herein, relative motion in a vertical direction between the array 1 and film 36 obviates the need for such expensive higher resolution arrays without degrading the quality of the captured image.

In one embodiment, the array 1 is periodically displaced vertically relative to the film 36, one half of the distance 69 separating the centers of the elements 3 on alternate scanned lines such as lines 71 and 73, shown in region 13. It may be appreciated in examining the pixels thereby generated in the scanning process associated with region 13 of film 36 in comparison to those in region 11, that substantially twice the vertical resolution may thereby be achieved with such relative vertical motion of the array 1 relative to the film 36 in comparison with prior art scanning (wherein the vertical relation between the array 1 and film 36 remained static). Of course, as hereinbefore noted, horizontal resolution may be altered as desired by varying the relative speed of the film 36 or scan rate when traversing past the array 1.

With the foregoing in mind, it will be appreciated that this enables a lower resolution and therefore lower cost array such as a 1024 element array to emulate in many ways the benefits of a higher resolution array such as a 2048 element array. It will be noted however, that the modulation transfer function or "MTF", e.g. the frequency response of the lower resolution element array, will not be altered. Higher frequencies may be boosted after capture by image processing in software, for example. However it has been found in practice that using the approach described herein, the resolution of a given array is typically extended in the order of 25% or so. This is nevertheless a significant advance and affords the potential to capitalize on the increased resolution to provide additional function heretofore not present in prior art implementations, such as the ability to include a timing track within the scanned area (such as that shown in Fig. 5 at reference numeral 59). As elsewhere detailed herein, this provision of a timing track within the scanned area, effected without requiring a higher resolution linear array, in turn provides numerous significant benefits such as being able to correlate physical locations on the film with the resulting captured pixels - thereby making it possible to effect image corrections in the digital domain to account for film curvature, other distortions and anomalies and the like.

As may be appreciated from the foregoing, significant improvement in resolution at no increased cost is a significant benefit. Further advantages includes a significant reduction in alias effects, rendering a cleaner scanned image which may, for example, result in nominally a 25% improvement over prior art images.

In a scanner, typically one of three factors will bound the limits of scan speed. First, is the sensitivity of the particular sensor elements 3 themselves. In order to capture a sufficient number of photons in a shorter integration time, more photons are required per unit of time. Thus, for a given scan speed, one solution is to simply provide for greater illumination of the target to be scanned.

A second factor giving rise to a bottleneck in limits on scan speed is the transfer time necessary to digitize the electrical signals corresponding to the captured pixels and transfer the digitized results into the computer or storage. Yet a third such limitation on scan speed is the computation time necessary to process the pixels. The number of sensed pixels (and resulting computation) using the approach described herein is increased significantly (as is readily apparent from inspection of region 13 of Fig. 9) by more than the increase in output pixels. However, the sensor integration time nevertheless remains the same because the excess number of pixels integrate together to reduce noise. Thus, depending upon which of the foregoing three elements is the causation of the scan speed limitation or bottleneck, the technique described herein may or may not necessitate a slowing of the scan rate otherwise associated with prior art scanning techniques.

Turning now to Fig. 31, a schematic illustration of various geometrical points in the scanning process is provided. First, the film 36 is seen depicted disposed in an arcuate manner defining an imaginary curved path or arc 162. It will be recalled that this curved shape of the film arises from its disposition on the outer circumference of the drum assembly 28. First and second locations 168, and 170 schematically illustrate the location of the source of light and the scanning process along a scan line 164. The optical path of the scan is shown by line 166 intersecting the scan line 164, the film 36, and the first location of the light source 168. It will be noted that this line is offset by a small distance 172 from the axle 34 of the drum assembly so that the axle does not interfere with the scan process.

A scanning area 150 is shown on the surface 172 of the film 36. This scan area presented to the scanner is maintained in a substantially flat configuration so as to avoid aberrations and distortions associated with scanning curved film as in the prior art. The area 150 is held flat by reason of its disposition in an arcuate posture and the fact that it is held against the film support shoulders of the drum assembly by means of the bands, retention ridges, or the like, along the edges 152 and 154 of the film 36.

The optical path of the scan is "direct" in the sense that nothing impedes the passage of light from location 168 to location 170 other than the film itself. It will be recalled that in the prior art the film is sandwiched in a plastic holder or the like in order to flatten the film for the scan process, resulting in the light having to pass through this plastic in addition to the film, thereby adversely affecting the quality of the scan.

In the preferred embodiment, the drum assembly 28 is in the form of a cylindrical drum. Accordingly, the arc 162 would essentially form a substantially semicircular arc 162 from the beginning point of the arc 156 to the end point 152, and, accordingly, would define a radius of curvature extending from the axle 34 to the inner surface 172 of the film 36. However, other shapes of the arc 162 may be employed. The first location 168 will be seen to be "outside" the arc 162 whereas the second location 170 may be said to be "within" the arc. A line 160 is further depicted transverse to and intersecting the arc 162. The line along which the linear scanning occurs, 164, will thus be seen preferentially to be parallel to this line 160 which traverses the film surface and intersects the arc.

## Claims

1. Apparatus for scanning an image stored in a medium comprising:
means for scanning first locations (7) on said medium; and
means for scanning second locations (51) on said medium, said second locations being disposed between said first locations.

2. The apparatus of Claim 1, wherein each second location is disposed in space between a corresponding pair of first locations.

3. The apparatus of Claim 2 wherein said first locations define a first line.

4. The apparatus of Claim 3 wherein said second locations lie on said first line.

5. The apparatus of Claim 3 wherein said second locations define a second line which is parallel to said first line.

6. The apparatus of Claim 4 or 5 further including means (92) for urging said medium along a longitudinal axis perpendicular to said first line.

7. The apparatus of Claim 6 as dependent on claim 5, wherein said medium is urged along said longitudinal axis between said scanning of said first locations and said scanning of said second locations.

8. The apparatus of any of Claims 4 to 7, wherein said means for scanning said first and second locations comprises a single linear scanning array (1) parallel with said first line.

9. The apparatus of Claim 8, further comprising means (13, 15, 112) for displacing said array in a first direction parallel with said first line in between scanning said first and second locations.

10. The apparatus of Claim 9, wherein adjacent ones of said first locations are separated by a preselected distance, and wherein said displacing means displaces said array one-half of said preselected distance.

11. The apparatus of Claim 9 or 10, further comprising means for displacing said array in a second direction, opposite to said first direction, after scanning said second locations.

12. The apparatus of claim 11 as dependent on claim 10, wherein said displacing means displaces said array one-half of said preselected distance in said second direction.

13. The apparatus of any preceding claim, wherein said medium is film (36), and the apparatus further comprises:
means for disposing said film between a light source (114) and a light scanner means (110) for collecting light; and
means (42) for directing light from said light source through said film to said light scanner means.

14. A method of scanning an image stored in a medium comprising the steps of:
scanning first locations (7) on said medium; and
scanning second locations (51) on said medium, said second locations being disposed between said first locations.

15. A method of resizing an image represented in a pixel grid having a first row of pixels and a second row of pixels parallel to said first row and offset relative to said first row to form a diagonal pixel grid, said method comprising the steps of:
resizing said first row of pixels to a third row of pixels parallel to said first row; and
resizing said second row of pixels to a fourth row of pixels parallel to said second row, pixels in said fourth row lying along columnar lines perpendicular to said third row, each of said columnar lines intersecting a corresponding pixel in said third row.

16. The method of claim 15 further including resizing pixels lying along at least one columnar line and transforming a respective first column of pixels into a second column of pixels.

17. The method of claim 15 or 16, wherein said step of resizing said first row includes the step of convolving said first row of pixels with a sinc function.

18. A computer system for resizing an image represented in a pixel grid having a first row of pixels and a second row of pixels parallel to said first row and offset relative to said first row to form a diagonal pixel grid, said system comprising:
means for resizing said first row of pixels to a third row of pixels parallel to said first row; and
means for resizing said second row of pixels to a fourth row of pixels parallel to said second row, pixels in said fourth row lying along columnar lines perpendicular to said third row, each of said columnar lines intersecting a corresponding pixel in said third row.
